# EUROPÄISCHE PATENTSCHRIFT

(11) **EP 0 913 751 B1**
(45) Veröffentlichungstag und Bekanntmachung des Hinweises auf die Patenterteilung: **03.09.2003**
(21) Anmeldenummer: 98119032.5
(22) Anmeldetag: 08.10.1998
(51) Int. Cl.: G05D 1/02, G08G 1/16, G01S 17/93, G01S 13/93, B60K 31/00

(54) **Autonomes Fahrzeug und Verfahren zur Steuerung eines autonomen Fahrzeuges**
Autonomous vehicle and guiding method for an autonomous vehicle
Véhicule autonome et méthode de guidage d'un véhicule autonome

(30) Priorität: 03.11.1997 DE 19748405
(43) Veröffentlichungstag der Anmeldung: 06.05.1999
(73) Patentinhaber: Volkswagen Aktiengesellschaft, 38436 Wolfsburg (DE)
(72) Erfinder: Bergholz, Ralf, Dr., 38108 Braunschweig (DE); Weisser, Hubert, Dr., 38165 Lehre (DE); Timm, Klaus, Prof. Dr.-Ing., 21465 Wentorf (DE)

(56) Entgegenhaltungen:
- EP-A- 0 488 828
- EP-A- 0 738 946
- DE-A- 3 637 165
- DE-A- 4 028 789
- GB-A- 2 309 555
- US-A- 5 081 585
- US-A- 5 475 494
- US-A- 5 483 453
- US-A- 5 633 705

## Beschreibung

Die Erfindung betrifft ein autonomes Fahrzeug und ein Verfahren zur Steuerung eines autonomen Fahrzeuges.

Seit längerer Zeit sind vielfältige Anstrengungen zur Realisierung von autonomen Fahrzeugen unternommen worden, wobei unter einem autonomen Fahrzeug ein Fahrzeug verstanden wird, das sich mit oder ohne menschliche Passagiere selbständig von einem Ausgangspunkt zu einem Zielpunkt bewegt. Davon zu unterscheiden sind Fahrzeuge, die mittels Draht oder Funk femgesteuert werden, wo also ein Mensch weiterhin außerhalb des Fahrzeuges für die Bewegung verantwortlich zeichnet.

Solche autonomen Fahrzeuge haben bereits im Materialtransportwesen einen solchen Standard erreicht, daß diese vielfältig industriell Anwendung gefunden haben. So sind autonome Fahrzeugsysteme vorgeschlagen worden, bei denen längs der Fahrstrecke ein Führungskabel bzw. Leitdraht angeordnet ist und das Fahrzeug durch dieses Kabel geführt wird. Wenn ein bestimmtes Signal an das Führungskabel übermittelt wird, so wird das Vorhandensein dieses Signals durch eine an dem Fahrzeug installierte Abnehmerspule festgestellt, und das Fahrzeug bewegt sich entlang dem Führungskabel auf der Fahrstrecke, wobei die Abweichung von der vorgesehenen Fahrstrecke mit Hilfe des Führungskabels festgestellt wird. Bei einer weiteren bekannten Ausführungsform für ein autonomes Fahrzeugsystem ist auf der Fahrbahnoberfläche längs der Fahrstrecke anstelle des Führungskabels ein optisch reflektierendes Band, beispielsweise ein Aluminium- oder Polyvinyl-Band, angebracht und auf dem autonomen Fahrzeug sind ein Projektor und ein Lichtempfänger angeordnet. Das von dem Projektor ausgesandte Licht wird durch das Band reflektiert und von dem Lichtempfänger aufgefangen, und auf diese Weise wird das unbemannte Fahrzeug längs des reflektierenden Bandes geführt. Nachteilig an den bekannten autonomen Fahrzeugen ist, daß die gewünschten Fahrstrecken nicht freiwählbar sind, sondern vorab installiert werden müssen.

Aus der DE 39 12 353 ist ein autonomes Transportfahrzeug bekannt, umfassend eine Bildbearbeitungseinheit, die die Umgebung in Vorwärtsrichtung des Fahrzeuges fotografiert und das fotografierte Bild verarbeitet, eine Ortsbestimmungseinheit, die auf der Grundlage von mit Hilfe eines Radgeschwindigkeitssensors, eines Kreiselgerätes und ähnlicher gewonnener Informationen die Position des Fahrzeuges in einem absoluten Koordinatensystem berechnet, eine motorische Einheit, zu der Lenkung, Gaspedal, Bremsanlage, Blinker und dergleichen des Fahrzeuges sowie Stellglieder zur Betätigung dieser Einrichtungen einschließlich der zugehörigen Stellgliedtreiber gehören, eine Einheit, in der Lageplan- oder Landkarten-Daten über ein Ziel und Informationen über eine Fahrstrecke gespeichert sind, eine Fahrt-Steuereinheit, die anhand von der Bildverarbeitungseinheit, der Ortsbestimmungseinheit und der Informationsspeicher-Einheit erhaltenen Informationen die motorische Einheit derart ansteuert, daß das Fahrzeug zu einem letzten Zeitpunkt fährt, und eine Benutzerschnittstelle zur Eingabe von Informationen über ein Ziel, d.h. einer Vielzahl von Zielpunkten, die durch die Fahrt-Steuereinheit auf der Fahrtstrecke festgelegt sind und zur Anzeige des von der Bildverarbeitungseinheit gewonnenen Bildes sowie anderer Informationen. Dazu umfaßt die Bildverarbeitungs-Einheit zwei im vorderen Bereich des Fahrzeuges angeordnete Kameras, die ein Stereobild der Umgebung aufnehmen. Das durch die beiden Kamerasysteme fotografierte räumliche Bild wird in einem Bildverarbeitungsblock durch eine Rücktransinformation in ein ebenes Bild umgewandelt. Der Bildverarbeitungsblock erkennt beispielsweise ein Paar von auf die Fahrbahn aufgemalten weißen Linien (Führungslinien), einen Fahrbahn-Seitenrand, eine Mittellinie und dergleichen und mißt deren Lage in bezug auf das Fahrzeug. Im einzelnen wird durch die Abtastung der weißen Linien auf der Fahrbahn die räumliche Beziehung zwischen Fahrzeug und Fahrbahn berechnet, d.h. der Abstand des Fahrzeuges von der weißen Linie an der linken und/oder rechten Fahrbahnseite, der Winkel zwischen der Vorwärtsrichtung des Fahrzeugs und der Fahrbahn und dergleichen, und bei einer gekrümmten Fahrbahn wird die Krümmungsrichtung in halber Entfernung der Fahrbahn bestimmt. Zusätzlich wird die Entfernung des Fahrzeugs von einer Kreuzung bestimmt, indem der Schnittpunkt der weißen Linien vor der Kreuzung gemessen wird. Die Bildverarbeitungseinheit enthält weiterhin einen Ultraschallsensor, ein Laser-Radar und dergleichen zur Erfassung von Hindernissen, die sich auf der Fahrbahn vor dem Fahrzeug und seitlich des Fahrzeuges befinden, wie beispielsweise ein vorausfahrendes Fahrzeug, eine Leitplanke und dergleichen und zur Übermittlung der entsprechende Informationen an einen Positionsberechnungsblock des Fahrzeugs. Die Ortsbestimmungseinheit umfaßt zwei Radgeschwindigkeitssensoren, die am linken und rechten Hinterrad des Fahrzeugs angeordnet sind, einen Verarbeitungsblock, der die Ausgangssignale der beiden Radgeschwindigkeitssensoren aufnimmt und verarbeitet, und einen Berechnungsblock zur Berechnung der Fahrzeugposition in globalen Koordinaten Die Radgeschwindigkeitssensoren erfassen die Drehung der Hinterräder des Fahrzeugs und erzeugen für jedes Rad pro Umdrehung einige tausend Impulse. Wenn eine Differenz zwischen dem Anzahlen der für die einzelnen Räder erzeugten Impulse festgestellt wird, so bedeutet dies, daß eine Differenz zwischen den Weglängen der entsprechender Räder besteht, und diese Weglängendifferenz bildet die Basis für die Bestimmung der Krümmung des Fahrbahnabschnitts, der von dem Fahrzeug durchfahren wird. Außerdem gibt die Weglänge beider Räder die vom Fahrzeug zurückgelegte Wegstrecke an. Der Weg des Fahrzeugs kann somit anhand der von den Radgeschwindigkeitssensoren gelieferten Datenserien berechnet werden. Speziell können Informationen in bezug auf den Ort und die Lage des Fahrzeugs zu einem bestimmten Zeitpunkt, d.h. Informationen über den Ort und die Fahrtrichtung des Fahrzeugs in einem X-Y-Koordinatensystem hergeleitet werden. Wenn die Fahrzeugposition zu Beginn der Fahrt bereits bekannt ist, kann die aktuelle Position des Fahrzeugs während der Fahrt ständig überwacht werden, indem die Radgeschwindigkeitsdaten sequentiell verarbeitet werden. Da sich die Fehler bei der Positionsbestimmung aufsummieren, werden die Meßfehler um so größer, je länger der vom Fahrzeug zurückgelegte Weg ist. Aus diesem Grund ist ein Kreiselgerät vorgesehen, so daß die Position in einem absoluten Koordinierungssystem mit hoher Genauigkeit bestimmt werden kann. Ein derartiges autonomes Fahrzeug ist für den Materialtransport ist jedoch in der Anwendung nur auf abgegrenzte Gebiete, wie beispielsweise Werkhallen oder ein Werksgelände, wo nahezu gleiche äußere Bedingungen vorherrschen, geeignet.

Desweiteren ist in der deutschen Offenlegungsschrift DE 41 24 654 A1 ein Verfahren zur kontinuierlichen und automatischen Fahrzeugorientierung auf einer Fahrbahn beschrieben, bei dem zur besseren Transportkapazitätsauslastung von Verkehrswegen eine automatische Fahrzeugführung vorgeschlagen wird. Für das Verfahren wird eine möglichst hoch über der Fahrbahn am Fahrzeug aufgebrachte Fernsehkamera genutzt, die ständig digitalisierte Bildfolgen im Videotakt an ein Rechnersystem mit einem Programm zur speziellen Signalverarbeitung und Interpretation im Fahrzeug überträgt. Im Verfahren werden generische Straßenmodelle und einfache generische dynamische Modelle für die Fahrzeugbewegung ausgenutzt, um bisher enthaltene Fahrbahn- und Fahrzeugrelativlage-Erkennung zur Auswertung des nächsten Bildes verwenden zu können. Hierzu werden drei Teilmodelle kombiniert. Monokulare Bilddaten nur des letzten Bildes werden mit rekursiven Schätzverfahren zur Bestimmung der Straßenparameter und des eigenen Relativzustandes ausgewertet. Dadurch entsteht im Rechner eine räumliche Vorstellung des aktuellen Straßenverlaufs im Vorausschaubereich.

Aus der EP 0 679 976 ist ein autonomes Fahrzeug, insbesondere für den Einsatz im Tagebau, bekannt, das zur Positionsbestimmung ein erstes Positionsbestimmungssystem auf Basis von GPS (Global Positionierungssystem) und ein zweites Positionierungssystem IRU (Inertial Reference Unit) auf Basis eines Gyroskops aufweist, deren Daten in einem dritten Positionsbestimmungssystem zur genauen Positionsbestimmung miteinander verrechnet werden. Des weiteren umfaßt das autonome Fahrzeug ein Navigationssystem, mittels dessen das Fahrzeug auf vorbestimmten oder dynamisch ermittelten Wegen geführt wird. Das Navigationssystem kontrolliert einerseits die jeweils aktuelle Position als auch die mechanischen Komponenten wie Bremsen, Lenkung oder Motor, und kann bei Auftreten gravierender Fehler das Fahrzeug stillsetzen. Weiter umfaßt das Navigationssystem eine Hindernis- Erfassungseinrichtung, um auf der geplanten Route befindliche Objekte zu erfassen und gegebenenfalls einen Ausweichkurs zu fahren oder das Fahrzeug anzuhalten. Dazu ist ein Infrarot-Laserscanner im single-line-mode auf dem Dach des Fahrzeugs angeordnet, wobei die Abtastbreite zwischen 10 und 30° liegt. Der Abtaststrahl ist derart ausgerichtet, daß dieser nicht den Boden erreicht. Dadurch wird sichergestellt, daß erfaßte Hindernisse nicht auf Bodenunebenheiten beruhen. Zur Erfassung von Bodenunebenheiten ist ein zweiter Laserscanner im multiple-line-mode vorhanden, der in einem bestimmten Winkel auf den Boden gerichtet ist. Der Winkel ist dabei derart gewählt, daß Hindernisse in einer dem Bremsweg entsprechende Entfernung erfaßt werden, so daß das Fahrzeug rechtzeitig vor dem Hindernis abgestoppt werden kann. Dieses speziell für den Tagebau konzipierte autonome Fahrzeug ist sehr fortschrittlich im Bereich der Positionsbestimmung und der Weg-Generierung, läßt aber wesentliche Gesichtspunkte für die Nutzung eines autonomen Fahrzeugs im öffentlichen Straßenverkehr unberücksichtigt. So ist beispielsweise eine Beschränkung des auszuwertenden Sichtfeldes im Straßenverkehr nicht möglich, da Fahrzeuge auf einmündende Straßen rechtzeitig vorher erfaßt werden müssen. Zum einen um entsprechend den jeweils anzuwendenden Verkehrsregeln das Fahrverhalten abzustimmen und andererseits präventiv auch auf ein unvorschriftsmäßiges Verhalten des einmündenden Fahrers reagieren zu können. Dies soll verdeutlichen, daß zwar Grundstrukturen der bekannten autonomen Fahrzeuge teilweise, wie z. B. das Positionsbestimmungssystem, generell geeignet sind, andere hingegen in der bekannten Art unzureichend sind.

Aus der EP 0 738 946, ist eine automatische Fahrleiteinrichtung für ein autonomes Fahrzeug bekannt geworden, mit einem automatischen Fahrabschnitt, der dafür vorgesehen ist, eine straße vor dem Fahrzeug-basierend auf erfassten straßendaten-zuerkennen und das Fahrzeug so zusteuern/regeln, dass es auf der erkannten straßegemäß einem auf einer straßenkarte voreingestellten Zielkurs fährt.

Der Erfindung liegt daher das technische Problem zugrunde, ein autonomes Fahrzeug, das auch für den Einsatz im öffentlichen Straßenverkehr geeignet ist, sowie ein Verfahren zur Steuerung eines oder mehrerer autonomer Fahrzeuge zu schaffen.

Die Lösung des technischen Problems ergibt sich durch die Merkmale der Patentansprüche 1 und 21.

Dabei werden verschiedene, jeweils einzeln bereits für Kraftfahrzeuge bekannte Sensoren synergetisch zusammen eingesetzt, so daß die Anordnung von Sensoren im weitesten Sinne bei allen Witterungsbedingungen und unterschiedlichsten Verkehrssituationen einschließlich Straßenführung sicher alle umgebenden Objekte und/oder Hindernisse erfassen und entsprechend reagieren kann. Dies ermöglicht auch den Einsatz im öffentlichen Straßenverkehr oder anderen komplexen Umgebungen. Weitere vorteilhafte Ausgestaltungen der Erfindung ergeben sich aus den Unteransprüchen.

Die Erfindung wird nachfolgend anhand eines bevorzugten Ausführungsbeispiels näher erläutert. Die Figuren zeigen:
- Fig. 1: eine Draufsicht auf eine Anordnung von Sensoren eines autonomen Fahrzeugs,
- Fig. 2: eine Draufsicht auf eine Fahrzeugaktorik,
- Fig. 3: die Abstrahlcharakteristik eines Radar-Sensors,
- Fig. 4: die Abstrahlcharakteristik eines Laserscanner-Sensors im vorderen Fahrzeugbereich,
- Fig. 5: die Abstrahlcharakteristik eines Laserscanner-Sensors im hinteren Fahrzeugbereich,

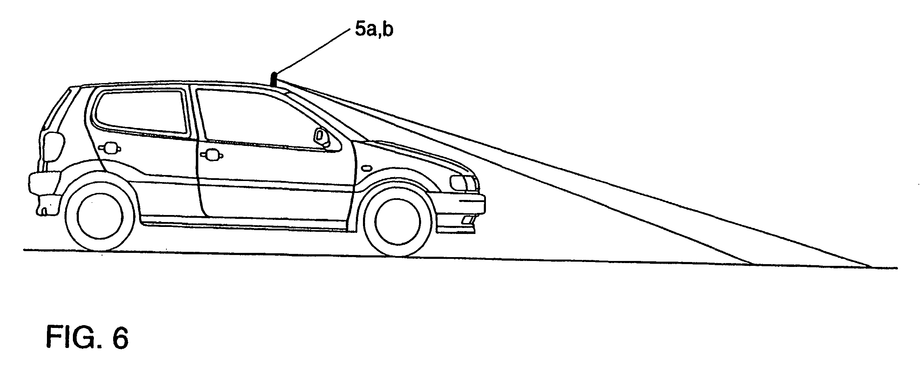

- Fig. 6: die Abstrahlcharakteristik eines auf die Fahrbahn gerichteten Laserscanner-Sensors im vorderen Fahrzeugbereich,
- Fig. 7: die Abtastcharakteristik zweier seitlich angeordneter Kameras,
- Fig. 8: ein schematisches Blockschaltbild in der obersten Hierachieebene des autonomem Fahrzeugs und
- Fig. 9: und ein Blockschalt einer Vorrichtung zur Generierung eines virtuellen Fahrdrahts.

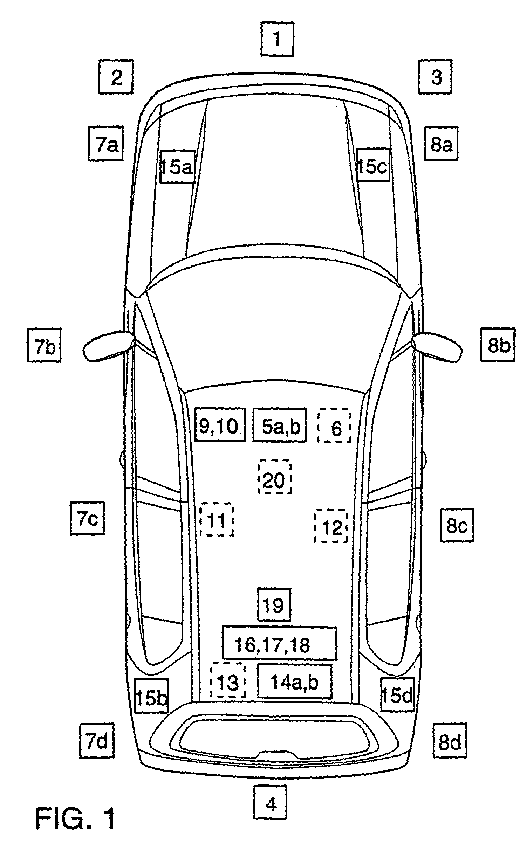

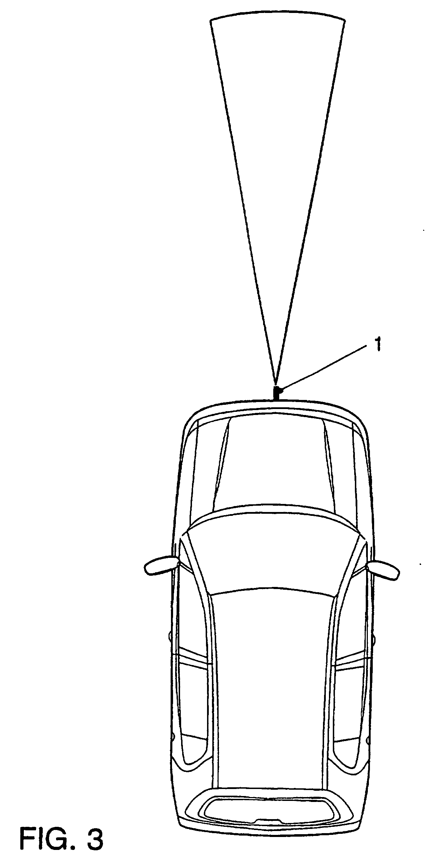

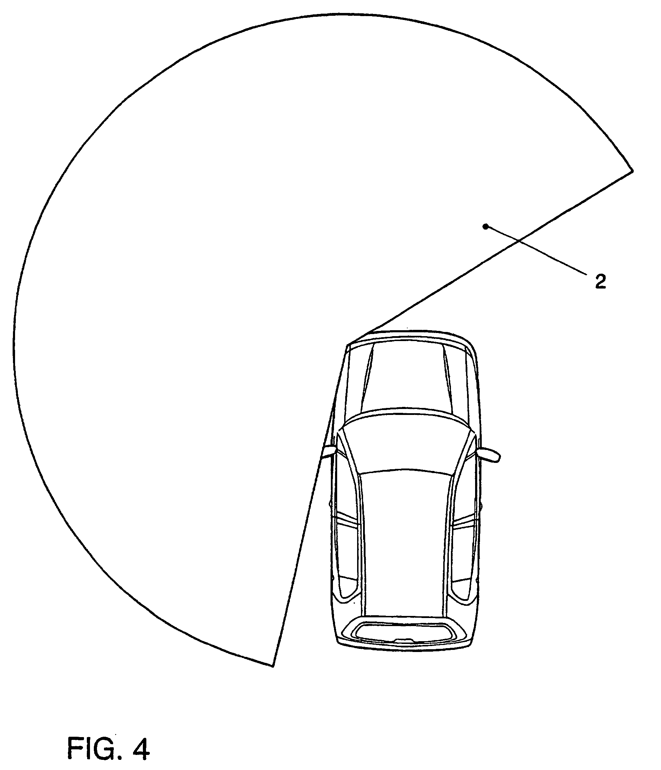

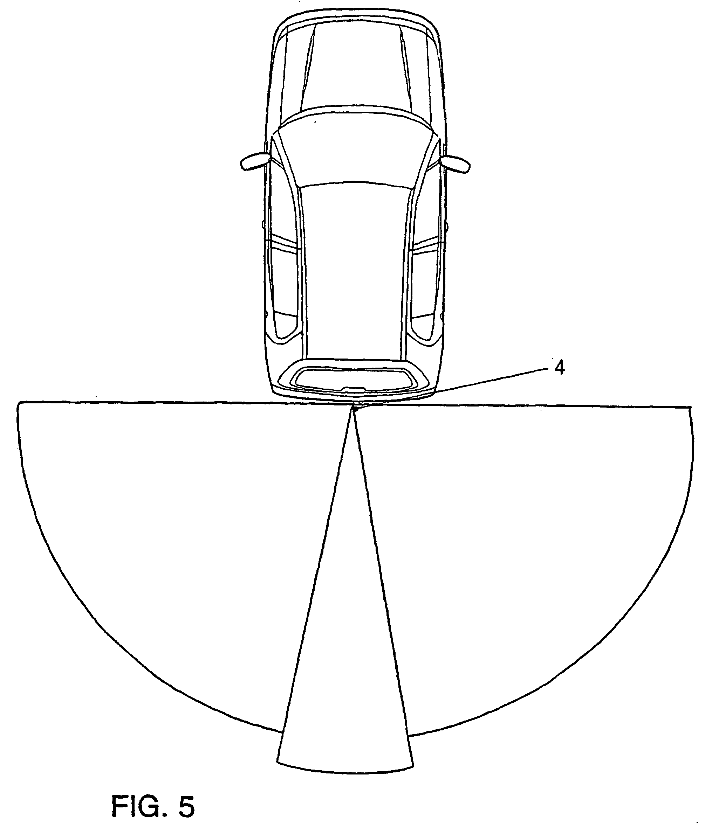

In der Fig. 1 ist eine Draufsicht auf ein autonomes Fahrzeug mit einer schematischen Anordnung einer Vielzahl von Sensoren dargestellt, deren jeweilige Wirkungsweise und Funktion nachfolgend erläutert wird. Im vorderen Bereich des autonomen Fahrzeugs ist mindestens ein Radar-Sensor 1 angeordnet. Derartige Radar-Sensoren 1 sind z. B. aus Vorrichtungen zur Abstandsmessung (beispielsweise ADR) von Fahrzeugen bekannt. Mittels des Radar-Sensors 1 kann beispielsweise die Anzahl der im Vorfeld des autonomen Fahrzeugs befindlichen Objekte, deren Abstand und relative Geschwindigkeit erfaßt werden. Aufgrund des stark begrenzten horizontalen Erfassungsbereiches von Radarsensoren 1 werden diese lediglich zur Objekterkennung vor dem Fahrzeug vorgesehen. Die Abstrahlcharakteristik des Radarsensors 1 ist in Fig. 3 dargestellt. Der Vorteil von Radar gegenüber optischen Sensoreinrichtungen ist, daß Radar auch bei ungünstigen Witterungsbedingungen (Nebel, Schnee, Regen, Staub) seine Leistungsfähigkeit beibehält. Dieser Umstand prädestiniert den Radarsensor 1 für die Unterstützung von Laserscanner-Sensoren 2,3, die ebenfalls zur Objekterkennung eingesetzt werden, insbesondere zur Objekterkennung bei Einmündungen und Kreuzungen. Die Laserscanner-Sensoren 2,3 sind seitlich im vorderen Bereich des Fahrzeugs beispielsweise in den Kotflügeln angeordnet. Die 2D-Laserscanner-Sensoren 2 und 3 verfügen über einen horizontalen Erfassungsbereich von mindestens 270°, so daß im hinteren Bereich lediglich ein weiterer Laserscanner-Sensor 4 mit horizontal 180° vorgesehen werden muß. Die Abstrahlcharakteristik des Laserscanner-Sensors 2 ist in Fig. 4 dargestellt. Zusammen mit dem Laserscanner-Sensor 3 decken die beiden praktisch den gesamten vorderen und seitlichen Bereich des Fahrzeuges ab. Da zur vollständigen Rundum-Erfassung daher nur die erwähnten 180° im hinteren Bereich vom Laserscanner-Sensor 4 benötigt werden, können die verbleibenden 180° des Scanbereiches des Laserscanner-Sensors 4 als zusätzliche Zeilen innerhalb eines inneren 30°-Erfassungsbereiches eingesetzt werden, so daß dieser Laserscanner-Sensor im mittleren Bereich quasi eine dreidimensionale Objekterfassung ermöglicht, was in Fig. 5 dargestellt ist. Bei Ausfall des Laserscanner-Sensors 4 ist ein eingeschränkter Fahrbetrieb noch möglich, jedoch dürfen keine Wendemanöver mehr durchgeführt werden.

Weiterhin ist vorzugsweise auf dem Dach vome oder an der Windschutzscheibe im Rückspiegelbereich ein weiterer Laserscanner-Sensor 5a angeordnet, dessen Hauptaufgabe es ist, Löcher im Boden oder kleine Hindernisse auf dem Boden zu erkennen. Hierzu wird dieser Laserscanner-Sensor geschwindigkeits- und witterungsabhängig nachgeführt, um notfalls vor dem Loch oder dem Hindernis anhalten zu können. Im Gegensatz zum Stand der Technik erfolgt die Nachführung auch in Abhängigkeit von den Witterungsverhältnissen, da diese neben der Geschwindigkeit einen wesentlichen Einfluß auf die Länge des Bremsweges haben. Befindet sich im Strahlengang des Laserscanner-Sensors 5a ein vorausfahrendes Objekt, so übernimmt dieser die Aufgabe der Objekterkennung und - verfolgung. Der Laserscanner-Sensor 5a hat einen horizontalen Erfassungsbereich von 45° und vertikal von 5°. Aufgrund des großen horizontalen Erfassungsbereiches kann dieser Sensor auch die Spur- und Seitenranderkennung unterstützen.

Wie noch gezeigt wird, muß ein Ausfall des Laserscanner-Sensors 5a zum sofortigen Anhalten des autonomen Fahrzeuges führen. Um hierbei die Verfügbarkeit zu erhöhen, wird ein identischer Laserscanner-Sensor 5b zusätzlich verwendet, um entweder bei Ausfall des Laserscanner-Sensors 5a unmittelbar dessen Aufgabe zu übernehmen, oder aber beide Laserscanner-Sensoren 5a, b parallel als redundantes Gesamtsystem zu betreiben.

Aufgrund des vertikal begrenzten Sichtfeldes des Laserscanners 5a bzw. 5b ist zur Erkennung von Durchfahrthöhen ein weiterer Laserscanner-Sensor 6 vorhanden, der den gleichen horizontalen und vertikalen Erfassungsbereich aufweist, jedoch nicht nachgeführt wird. Dieser Laserscanner-Sensor 6 kann neben der Durchfahrthöhenerkennung auch zur Unterstützung der Objekterkennung eingesetzt werden. Voraussetzung hierfür ist jedoch eine Abschattung der Laserscanner-Sensoren 5a, b gegenüber dem Laserscanner-Sensor 6. Ein Ausfall des Laserscanner-Sensors 6 kann dadurch kompensiert werden, daß die zu beachtenden Durchfahrtshöhen direkt der digitalen Karte entnommen werden, so daß kein unmittelbares Stillsetzen des autonomen Fahrzeugs erforderlich ist.

Bei langsamer Fahrt und beim Einparken ist es nicht möglich, mit den vorgesehenen Laserscanner-Sensoren 2, 3 die Flanken des Fahrzeuges vollkommen zu erfassen. Daher sind jeweils beispielsweise vier Ultraschallsensoren 7a - d, 8a - d zu beiden Seiten des Fahrzeuges angeordnet, die bei langsamer Fahrt auch zur Unterstützung der Straßenranderkennung einsetzbar sind.

Im vorderen Bereich des Fahrzeugs ist auf dem Dach eine Videokamera 9 angeordnet, die primär zur Spurerkennung dient. Zusätzlich kann jedoch mit dieser Kamera 9 auch die Straßenranderkennung und die Objekterkennung unterstützt werden. Außerdem kann mit der Kamera 9 auch die Durchfahrthöhenerkennung des Laserscanner-Sensors 6 gestützt werden.

Eine weitere im vorderen Bereich angeordnete Videokamera 10 dient zur Spur-, Objektund/oder Verkehrszeichenerkennung. Die Kameras 9, 10 können auch zu einem sich gegenseitig ergänzenden System zusammengefaßt sein, wobei die Kamera 9 für den Fembereich und die Kamera 10 für den Nahbereich ausgelegt wird.

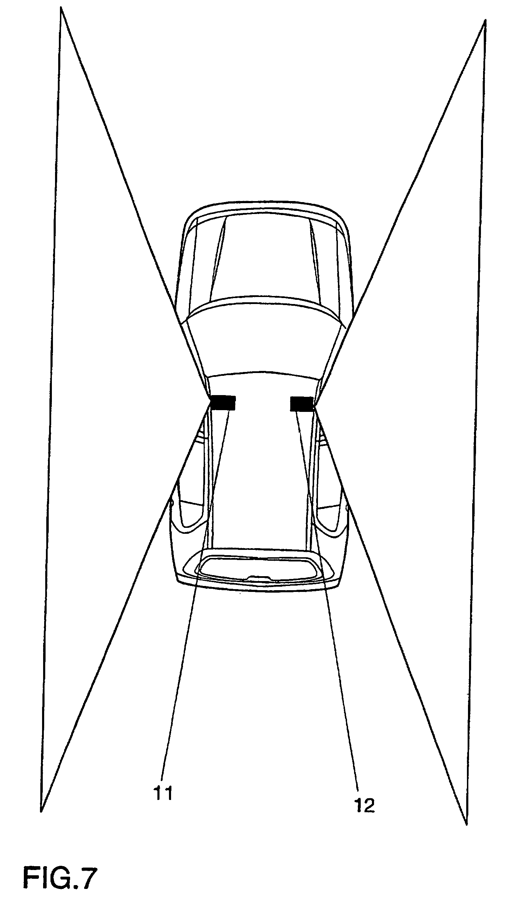

Für die Erkennung der Nachbarspuren (und somit auch zur Erkennung der eigenen Spur) und des Straßenrandes ist jeweils eine weitere Videokamera 11, 12 seitlich auf dem Dach des autonomen Fahrzeuges angeordnet, deren Abtastcharakteristik in Fig. 7 dargestellt ist. Durch Anbringung einer weiteren Videokamera 13 im hinteren Bereich des autonomen Fahrzeuges ist außerdem die Unterstützung der Spur- und Straßenranderkennung möglich. Primäre Aufgabe der Videokamera 13 ist jedoch die Unterstützung des quasi dreidimensionalen Laserscanner-Sensors 4 für die Objekterkennung.

Zur hochgenauen Positionsbestimmung befindet sich auf dem Dach ein DGPS-Sensor 14a (Differential Global Positioning System), der in Weltkoordinaten die absolute Position des autonomen Fahrzeuges in Verbindung mit einer digitalen Karte ermittelt. Solche digitalen Karten sind z. B. aus bekannten Navigationssystemen moderner Kraftfahrzeuge hinlänglich bekannt. Auch ein Ausfall des DGPS-Sensors 14a führt, wie noch gezeigt wird, zum sofortigen Anhalten des autonomen Fahrzeuges. Um hier die Verfügbarkeit zu erhöhen, wird ebenfalls ein identischer DGPS-Sensor 14b verwendet, um bei Ausfall des DGPS-Sensors 14a unmittelbar dessen Aufgaben zu übernehmen oder die beiden DGPS-Sensoren 14a, b parallel zur Erzeugung einer Redundanz zu betreiben. Zusätzlich kann ein Gyroskop zur Anwendung kommen, um auch bei funktechnischer Abschirmung beispielsweise in einem Tunnel stets exakt die Position des autonomen Fahrzeugs bestimmen zu können.

Des weiteren ist den einzelnen Rädern des autonomen Fahrzeugs jeweils ein Radsensor 15 zugeordnet, mittels derer eine Reibwerterkennung durchführbar ist.

Auf dem Dach des autonomen Fahrzeuges sind ferner ein Luftdruck-Sensor 16, ein Feuchtigkeits-Sensor 17 und ein Temperatur-Sensor 18 angeordnet. Aus den Daten der Sensoren 16 - 18 wird auf die vorliegenden und zu erwartenden Witterungsbedingungen zurückgeschlossen. Diese Ergebnisse dienen beispielsweise zur Verifizierung der Ergebnisse der einzelnen Sensorsysteme, um z. B. die zu erwartenden Sichtbedingungen zu bestimmen und mit den durch die Laserscanner-Sensoren 2 - 6 ermittelten Sichtweiten abzustimmen.

Weiterhin sind am autonomen Fahrzeug vier richtungsanhängige Mikrophone 19 und Lautsprecher 19 angeordnet. Mit den Mikrophonen 19 ist die Erkennung von akustischen Signalen zu realisieren (z. B. Martinshorn, Bahnübergang). Die Lautsprecher 19 dienen dazu, z. B. die Leitzentrale mit etwaigen Passanten verbal und kommunikativ in Verbindung zutreten. Für verbale Aufforderungen, die nicht auf eine Kommunikation abzielen, können die Lautsprecher auch unmittelbar durch das autonome Fahrzeug benutzt werden.

Des weiteren ist auf dem Dach vorne eine Wärmebildkamera 20 angeordnet, um die Objekterkennung mittels eines Temperaturprofils zu unterstützen und somit beispielsweise unbewegliche Personen am Straßenrand von nicht lebendigen Gegenständen zu unterscheiden. Weiterhin ist die Wärmebildkamera 20 begrenzt geeignet, um eine Spur- und Straßenranderkennung durchzuführen. Vorzugsweise wird den einzelnen Kameras 9 - 13, 20 eine Kühleinrichtung zugeordnet, um beispielsweise eine direkte Sonneneinstrahlung zu kompensieren. Des weiteren können Abschirmmaßnahmen getroffen werden, um eine Blendung der Kameras 9 - 13, 20 durch die direkte Sonneneinstrahlung oder aufgrund von Reflexionen der nassen Fahrbahn zu vermeiden.

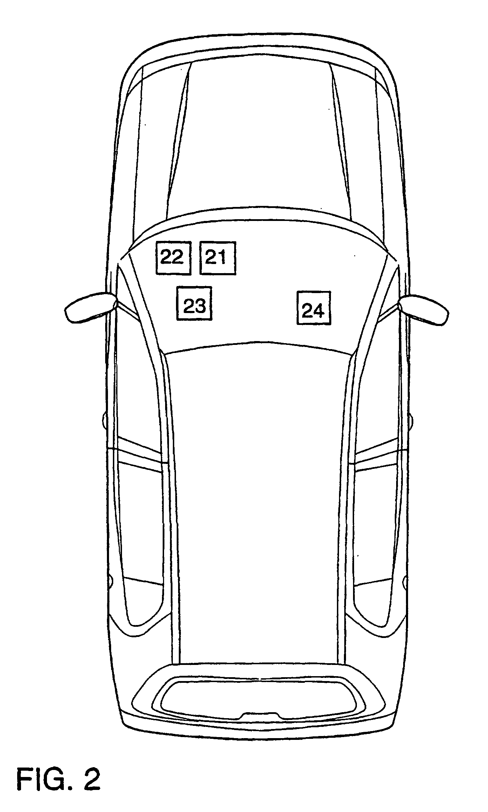

In der Fig. 2 ist eine Draufsicht auf das autonome Fahrzeug mit einer schematischen Anordnung von möglichen Aktuatoren dargestellt. Das autonome Fahrzeug umfaßt mindestens ein E-Gas 21, eine E-Bremse 22 und eine E-Lenkung 23. Wird das Fahrzeug nicht mit einem Automatikgetriebe ausgestattet, so wird zusätzlich eine E-Kupplung 24 benötigt. Derartige elektrisch gesteuerte Einrichtungen sind vom Grundprinzip aus der Kraftfahrzeugtechnik als x-by-wire-Systeme bekannt. Dort wird eine mechanische Stellbewegung in ein elektrisches Stellsignal gewandelt, so daß das Stellglied z. B. ein Pedal von der zu beeinflussenden Einrichtung mechanisch entkoppelt ist. Da in dem autonomen Fahrzeug kein die Pedale oder das Lenkrad betätigender Mensch vorhanden ist, muß die mechanische Bewegung der Stellglieder ersetzt werden, wozu sich prinzipiell zwei Lösungsalternativen anbieten. Zum einen kann die mechanische Bewegung durch einen Fahrroboter erzeugt werden, so daß die bekannten Einrichtungen nicht modifiziert werden müssen, oder aber auf eine mechanische Bewegung wird gänzlich verzichtet und die Fahrzeugkontrolleinrichtung erzeugt direkt elektrische Steuersignale für die Steuergeräte der einzelnen Aktuatoren. Analog erfolgt auch die Bedienung weiterer Komponenten wie beispielsweise der Lichtanlage des autonomen Fahrzeugs.

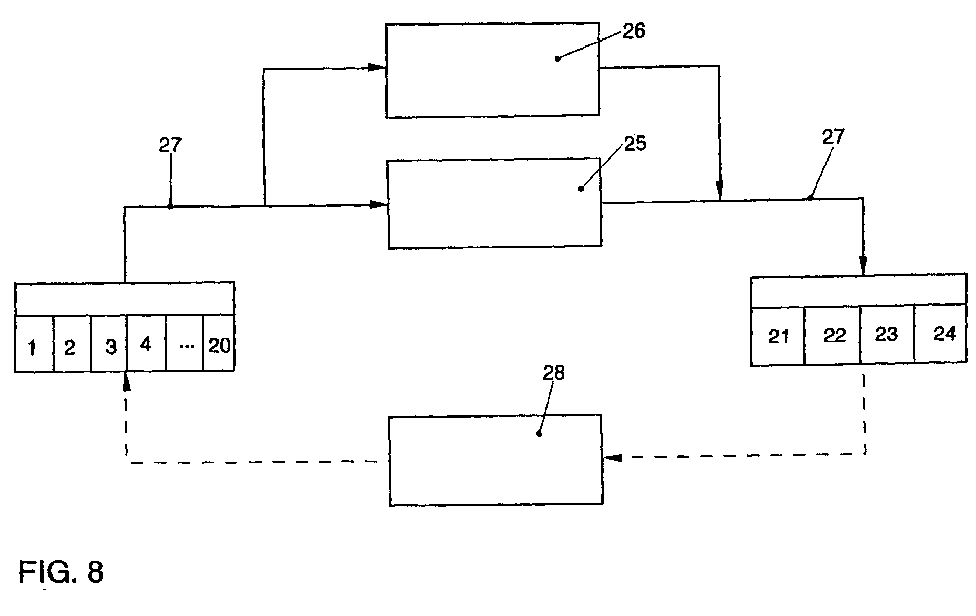

In der Fig. 8 ist ein Blockschaltbild des autonomen Fahrzeugs in der obersten Hierachieebene dargestellt. Die Anordnung von Sensoren 1 - 20 erfaßt Informationen von der Umwelt 28 bzw. dem autonomen Fahrzeug selbst und übergibt diese an einen Fahrzeugrechner 25 und eine Kollisionsvermeidungseinrichtung 26. Der Fahrzeugrechner, in dem die eigentliche Steuerung des autonomen Fahrzeugs erfolgt, und die Kollisionsvermeidungseinrichtung 26 arbeiten aus Sicherheitsgründen parallel, wobei die Kollisionsvermeidungseinrichtung 26 nur zur Vermeidung einer Kollisionsgefahr auf die Aktuatoren 21 - 24 einwirkt. Im Normalbetrieb erfolgt die Ansteuerung der Aktuatoren 21 - 24 ausschließlich durch den Fahrzeugrechner 25. Die Datenübertragung von den Sensoren 1 - 20 zum Fahrzeugrechner 25 und der Kollisionsvermeidungseinrichtung 26 sowie zu den Aktuatoren 21 - 24 erfolgt über CAN-Busse 27 (Controlled Area Network). Dabei werden vorzugsweise die Daten auf mehrere CAN-Busse 27 verteilt, um sicher die anfallenden Datenmengen übertragen zu können. Da eine Echtzeit-Verarbeitung der Daten notwendig ist, sollten die CAN-Busse 27 nicht am oberen Rand der Übertragungskapazität betrieben werden. Die vorverarbeiteten Daten der einzelnen Sensoren sind somit getrennt voneinander zu übertragen und in den nachgeschalteten Auswerteeinheiten aufgrund ihrer zeitlichen Codierung wieder zu einem Gesamtbild zusammenzusetzen. Hierbei ist möglichst ein hierarchisches Prinzip mit entsprechenden Filteralgorithmen zur Informationsverdichtung zu verwenden, um die Auswerteeinrichtungen nicht zu überlasten.

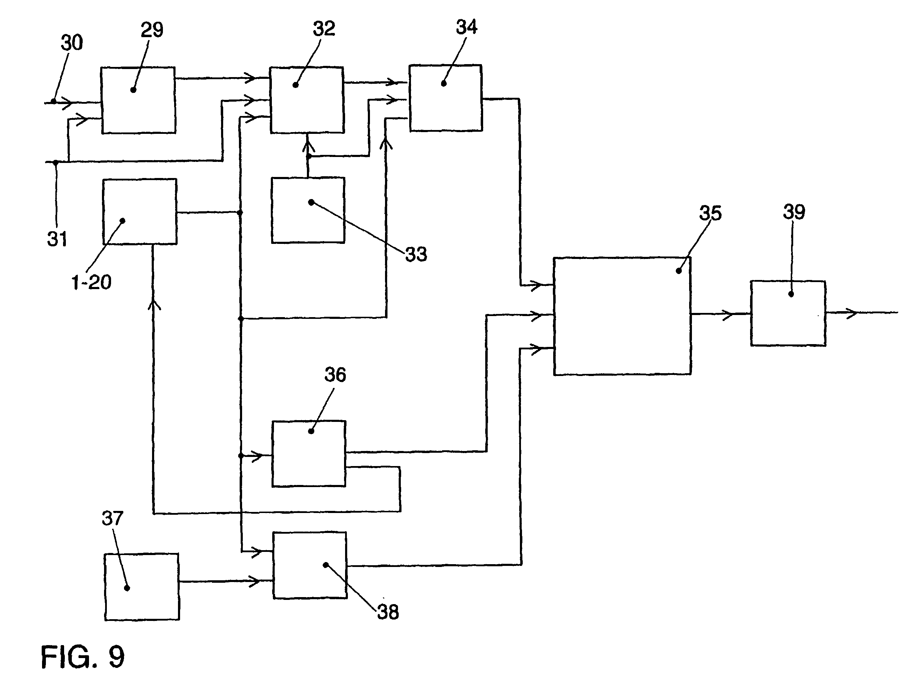

In der Fig. 9 ist ein Blockschaltbild der Vorrichtung zur Generierung des virtuellen Fahrdrahts dargestellt. Die Vorrichtung umfaßt eine Eingabeeinheit 29 für einen oder mehrere Fahraufträge, die sowohl über eine interne Verbindung 30 als auch über eine externe Kommunikationsverbindung 31 z. B. in Form eines Mobilfunktelefons zuführbar sind. Je nach Verwendung des autonomen Fahrzeuges können die Fahraufträge neben dem eigentlichen Ziel noch weitere Informationen enthalten. Soll das autonome Fahrzeug beispielsweise im öffentlichen Personen-Nahverkehr eingesetzt werden, so ist als zusätzliche Information die Anzahl der zu befördernden Personen notwendig, um dies mit der Kapazität des Fahrzeugs abzugleichen. Des weiteren kann die Dringlichkeit des Fahrauftrages berücksichtigt werden. Derartige Algorithmen sind beispielsweise für Dispositionsprogramme im öffentlichen Nahverkehr bereits im Einsatz und prinzipiell verwendbar. Wird das autonome Fahrzeug hingegen als individuelles Fahrzeug benutzt, so ist die externe Kommunikationsverbindung 31 für die Eingabeeinheit 29 entbehrlich, da nur der Fahrzeughalter selbst die Fahraufträge vergibt. Der oder die registrierten Fahraufträge der Eingabeeinheit 29 werden dann an eine Einrichtung 32 zur Routenplanung übergeben. Des weiteren erhält die Einrichtung 32 die genaue aktuelle Position des Fahrzeuges von den DGPS-Sensoren 14a, b sowie Verkehrsinformationen über die externe Kommunikationsverbindung 31. Die Verkehrsinformationen können z. B. Staumeldungen, Baustellen, Hinweise auf Großveranstaltungen wie Konzerte, Demonstrationen, Fußballspiele oder ähnliches sein. Mittels einer digitalen Karte 33, die der Einrichtung 32 zur Routenplanung zugeordnet ist, ermittelt diese eine optimale Route von der gegenwärtig aktuellen Position zum gewünschten Fahrziel unter Berücksichtigung der Verkehrsinformationen der externen Kommunikationsverbindung 31. Bezüglich der optimalen Route kann zwischen der optimalen Route hinsichtlich der Fahrzeit oder des geringsten Verbrauchs gewählt werden. Die digitale Karte 33 enthält neben der eigentlichen Straßenführung auch zusätzliche Informationen wie beispielsweise Durchfahrtshöhen von Brücken, die Anzahl der Fahrspuren einer Straße, Verkehrsschilder und ähnliches. Derartige digitalen Karten 33 sind bereits für Navigationshilfe-Einrichtungen in Kraftfahrzeugen bekannt. Die optimale Route liegt in der Einrichtung 32 für die Routenplanung in Form einer Summe von Streckenabschnitten vor, wobei der jeweils aktuelle Streckenabschnitt und gegebenenfalls der daran anschließende Streckenabschnitt einer Einrichtung 34 zur Generierung des Weges übergeben werden. Die Einrichtung 34 zur Generierung des Weges ermittelt einen optimalen Weg für den übergebenen Streckenabschnitt. Neben dem Weg als solchen enthält der optimale Weg Informationen über die jeweils zulässige Höchstgeschwindigkeit für einzelne Wegabschnitte, welche Fahrspur gewählt werden sollte, Radien auftretender Kurven, Ampeln, Vorfahrtsschilder, Stopschilder, Kreuzungen und wo und wie abgebogen werden soll. Diese sehr präzisen Vorgaben sind notwendig, da das autonome Fahrzeug sich nicht wie ein Mensch intuitiv verhalten kann. Ein menschlicher Fahrer fährt beispielsweise, obwohl er bald links abbiegen muß, möglichst lange auf der rechten oder gegebenenfalls mittleren Fahrspur, um nicht durch Linksabbieger an vorangehenden Kreuzungen behindert zu werden und wechselt dann in Abhängigkeit von der Verkehrssituation auf die Linksabbiegerspur. Die anderen Informationen sind notwendig, damit das autonome Fahrzeug rechtzeitig sein Fahrverhalten adaptieren kann. Dies ist insbesondere im Hinblick auf andere Verkehrsteilnehmer wichtig, die ein sehr abruptes Fahrverhalten irritieren und zu Fehleinschätzungen führen könnte. Da nicht alle Informationen über die Infrastruktur als Vorabinformationen in der digitalen Karte 33 enthalten, weil beispielsweise neue Verkehrsschilder aufgestellt wurden, werden der Einrichtung 34 darüber hinaus die erfaßten Sensorsignale der Sensoren 1 - 20 zugeführt, aus denen zusätzliche Infrastrukturinformationen entnehmbar sind, beispielsweise die von der Video-Kamera 10 erfaßten Verkehrsschilder oder die von den Sensoren 16 - 18 erfaßten Witterungsbedingungen, von denen beispielsweise wieder die zulässige Höchstgeschwindigkeit abhängig sein kann. Aus all diesen statischen Informationen wird der optimale Weg bestimmt, den man auch als virtuellen Ideal-Leitdraht bezeichnen könnte. Der generierte ideale Weg wird zusammen mit den aktuellen visuellen Sensorinformationen der Sensoren 9 - 13, 20 an eine Fahrzeugkontrolleinrichtung 35 übergeben.

Die erfaßten Sensorsignale der Sensoren 1 - 20 werden außerdem an eine Einrichtung 36 zur Objekterkennung übergeben. Die Einrichtung 36 zur Objekterkennung wertet die Informationen danach aus, ob ein oder mehrere Objekte erfaßt wurde, um was für Objekte es sich handelt (z. B. beweglich oder unbeweglich) und erzeugt gegebenenfalls Steuersignale zur Nachführung einzelner Sensoren wie beispielsweise der Kamera 9. Um aufgrund der Sensorinformationen exakt auf Art und Weise der Objekte oder Hindernisse schließen zu können, müssen die vorherrschenden Witterungsbedingungen bekannt sein. Diese können im wesentlichen aus den Informationen der Sensoren 16 - 18 abgeleitet werden. Da auch die Einrichtung 34 zur Generierung eines Weges die Witterungsbedingungen benötigt, können diese auch zentral ermittelt und an die entsprechenden Komponenten übergeben werden. Des weiteren wertet die Einrichtung 36 die Sensorinformationen danach aus, wieviel freie Verkehrsfläche (auch außerhalb der eigentlichen Straße) um das Fahrzeug herum existiert. Diese Information ist insbesondere zur Durchführung gegebenenfalls notwendiger Ausweichmanöver wichtig. Die prinzipielle Vorgehensweise bei der Auswertung der Sensorinformationen ist dem Fachmann dabei beispielsweise aus ADR-Systemen bekannt (automatische Distanz-Regelung). Hinzu kommt hier noch, daß die unterschiedlichen Sensorinformationen von unterschiedlichen Sensoren (z. B. Radarsensor 1 zu Laserscanner-Sensoren 2, 3) zueinander in Abhängigkeit von den Witterungsbedingungen gewichtet bzw. abgeglichen werden müssen. Die Einrichtung 36 zur Objekterkennung übergibt an die Fahrzeugkontrolleinrichtung 34 die ermittelte freie Verkehrsfläche, die erkannten, verfolgten und klassifizierten Objekte mit ihren Zustandsvektoren (Ort, Relativgeschwindigkeit etc.) sowie die vorherrschenden Witterungsbedingungen.

Neben den oben aufgeführten Sensoren 1 - 20 weist das autonome Fahrzeug noch eine weitere Anzahl von Sensoren 37 auf, mittels deren Informationen in einer Einrichtung 38 für die Zustandsdatenerkennung die allgemeinen Zustandsdaten und der Zustandsvektor des Fahrzeuges selbst zusammengestellt und erzeugt werden. Dabei handelt es sich bei Art und Anordnung um Sensoren wie sie aus modernen Kraftfahrzeugen hinlänglich bekannt sind, so daß eine nähere Erläuterung nicht erforderlich ist. Dabei werden insbesondere die Motordrehzahl, die Eigengeschwindigkeit, ABS-Sensorinformationen, Reibwerte, Lenkwinkel und ähnliches berücksichtigt, wobei auch Informationen der Sensoren 1 - 20 beispielsweise die Radsensoren 15 mit herangezogen werden. Zusätzlich können die Sensoren 37 für jedes Subsystem einen Zustandsbericht erstellen. Die Zustandsberichte und der Zustandsvektor werden ebenfalls an die Fahrzeugkontrolleinrichtung übergeben.

Die Fahrzeugkontrolleinrichtung 35 erzeugt aus nun aus all den übergebenen Informationen einen reellen Steuervektor der einerseits einer Einrichtung 39 für die Aktuatoren 21 - 24 als auch passiven Fahrzeugkomponenten wie beispielsweise den Blinkleuchten, der Fahrzeugbeleuchtung, der Scheibenwischvorrichtung und ähnlichem zu geführt wird. Im Gegensatz zum optimalen Weg der Einrichtung 34 berücksichtigt dieser Steuervektor auch dynamische Änderungen wie beispielsweise die erfaßten und beweglichen Objekte oder die jeweilige Ampelfarbe. Der Steuervektor enthält somit für jedes Teilstück einen Satz Steuerbefehle für die anzusteuernden Aktuatoren 21 - 24 und Fahrzeugkomponenten, wobei die Änderungsgeschwindigkeit des Steuervektors von der Infrastruktur und dem umgebenden Verkehr abhängig ist. In der Fahrzeugkontrolleinrichtung 35 sind die zu beachtenden Verkehrsregeln (z. B. rechts vor links bei einer gleichberechtigten Kreuzung) in Form von Algorithmen abgelegt. Da insbesondere im Stadtverkehr die Anzahl der auftretenden Verkehrszeichen begleitet von häufigen Wechseln der Vorfahrtssituationen sehr groß ist, müssen entweder soviel als möglich Verkehrszeichen in die digitale Karte 33 integriert werden, oder aber ein Parallel-Processing ist empfehlen, da ansonsten die Fahrzeuggeschwindigkeit an die Verarbeitungsgeschwindigkeit der Fahrzeugkontolleinrichtung 35 angepaßt werden muß, was unter Umständen von menschlichen Kraftfahrzeugführern als ärgemiserregend empfunden werden könnte. Um die Akzeptanz des autonomen Fahrzeugs sowohl bei Passagieren als auch bei anderen Verkehrsteilnehmern zu erhöhen, kann der Fahrzeugkontrolleinrichtung 35 zusätzlich eine menschliche Fahrstrategie zugeordnet werden, beispielsweise das langsame Heranfahren an eine rote Ampel.

### BEZUGSZEICHENLISTE

- 1: Abstandssensor, Radarsensor
- 2: Abstandssensor, Laserscanner-Sensor
- 3: Abstandssensor, Laserscanner-Sensor
- 4: Abstandssensor, Laserscanner-Sensor
- 5a, b: Abstandssensor, Laserscanner-Sensor
- 6: Abstandssensor, Laserscanner-Sensor
- 7a - d: Ultraschallsensor, Mikrowellen-Radarsensor
- 8a - d: Ultraschallsensor, Mikrowellen-Radarsensor
- 9: Kamera
- 10: Kamera
- 11: Kamera
- 12: Kamera
- 13: Kamera
- 14a, b: Positionserkennungseinrichtung, DGPS-Sensor
- 15a - d: Radsensor
- 16: Luftdruck-Sensor
- 17: Feuchtigkeits-Sensor
- 18: Temperatur-Sensor
- 19: Mikrofon, Lautsprecher
- 20: Wärmebild-Kamera
- 21: Fahrzeugaktorik, E-Gas
- 22: Fahrzeugaktorik, E-Bremse
- 23: Fahrzeugaktorik, E-Lenkung
- 24: Fahrzeugaktorik, E-Kupplung
- 25: Fahrzeugrechner
- 26: Kollisionsvermeidungseinrichtung
- 27: Daten-Bus, CAN-Bus
- 28: Umwelt
- 29: Eingabeinheit
- 30: interne Verbindung
- 31: Kommunikationsverbindung
- 32: Einrichtung zur Routenplanung
- 33: digitale Karte
- 34: Einrichtung zur Generierung des Weges
- 35: Fahrzeugkontrolleinrichtung
- 36: Einrichtung zur Objekterkennung
- 37: Sensor
- 38: Einrichtung für die Zustandsdatenerkennung
- 39: Einrichtung

## Patentansprüche

1. Autonomes Fahrzeug, umfassend
- eine Eingabeeinheit für einen oder mehrere Fahraufträge,
- eine Einrichtung zur Routenplanung, umfassend mindestens eine Positionserkennungseinrichtung und eine digitale Straßenkarte,
- eine Einrichtung zur Generierung eines Weges,
- eine Anordnung von Sensoren, umfassend jeweils mindestens einen Abstandssensor zur Erfassung von Objekten und Beschaffenheitsmerkmalen des Weges,
- eine Kollisionsvermeidungseinrichtung,
- eine Einrichtung zur Zustandsdatenerkennung des Fahrzeuges,
- eine Fahrzeugkontolleinrichtung
- und eine Einrichtung zur Steuerung der Fahrzeugaktorik in Abhängigkeit von der Fahrzeugkontolleinrichtung erzeugter Signale,
**dadurch gekennzeichnet, daß**
die Anordnung von Sensoren mindestens folgende Sensoren umfaßt:
- mindestens drei im vorderen Bereich des Fahrzeuges angeordnete Abstandssensoren (1, 2, 3)),
- mindestens einen im hinteren Bereich des Fahrzeuges angeordneten Abstandssensor (4),
- gegebenenfalls einen auf die Fahrbahn gerichteten Abstandssensor (5a, b), dessen Abtastwinkel nachführbar ist,
- an den jeweiligen Seiten des Fahrzeugs angeordnete Ultraschallsensoren und/oder Mikrowellen-Radarsensoren (7a - d, 8a - d)
- und mindestens jeweils eine im vorderen und hinteren Bereich des Fahrzeugs angeordnete Kamera (9, 10, 13).

2. Autonomes Fahrzeug nach Anspruch 1, **dadurch gekennzeichnet, daß** die Abstandssensoren (2, 3) zwei im wesentlichen horizontal ausgerichtete, im vorderen Bereich des Fahrzeuges angeordnete Laserscanner-Sensoren sind.

3. Autonomes Fahrzeug nach Anspruch 2, **dadurch gekennzeichnet, daß** die Laserscanner-Sensoren (2, 3) mit einem horizontalen Erfassungsbereich im Bereich von 270° ausgebildet sind.

4. Autonomes Fahrzeug nach einem der Ansprüche 1 bis 3, **dadurch gekennzeichnet, daß** der mindestens im hinteren Bereich des Fahrzeuges angeordnete Abstandssensor (4) ein Laserscanner-Sensor ist.

5. Autonomes Fahrzeug nach Anspruch 4, **dadurch gekennzeichnet, daß** der Laserscanner-Sensor (4) mindestens teilweise als 3D-Laserscanner ausgebildet ist.

6. Autonomes Fahrzeug nach einem der vorangegangenen Ansprüche, **dadurch gekennzeichnet, daß** der mindestens in vorderen Bereich des Fahrzeuges angeordnete Abstandssensor (1) ein Radar-Sensor ist.

7. Autonomes Fahrzeug nach einem der vorangegangenen Ansprüche, **dadurch gekennzeichnet, daß** der Abtastwinkel des Abstandssensors (5a, b) in Abhängigkeit von Fahrzeuggeschwindigkeit und/oder Witterungsbedingungen nachführbar ist.

8. Autonomes Fahrzeug nach einem der vorangegangenen Ansprüche, **dadurch gekennzeichnet, daß** der auf die Fahrbahn gerichtete Abstandssensor (5a, 5b) ein Laserscanner-Sensor ist.

9. Autonomes Fahrzeug nach Anspruch 8, **dadurch gekennzeichnet, daß** der auf die Fahrbahn gerichtete Laserscanner-Sensor (5a, 5b) auf dem Dach des Fahrzeuges oder hinter der Windschutzscheibe des Fahrzeuges im Rückspiegelbereich angeordnet ist.

10. Autonomes Fahrzeug nach einem der vorangegangenen Ansprüche, **dadurch gekennzeichnet, daß** die im vorderen und hinteren Bereich des Fahrzeuges angeordneten Kameras (9, 10 13) zur Objekt- und/oder Verkehrszeichen- und/oder Spurerkennung einsetzbar sind.

11. Autonomes Fahrzeug nach einem der vorangegangenen Ansprüche, **dadurch gekennzeichnet, daß** der Abstandssensor (5a, 5b) einen horizontalen Erfassungsbereich und/oder einen vertikalen Erfassungsbereich aufweist, wobei der horizontale Erfassungsbereich größer als der vertikale Erfassungsbereich ist.

12. Autonomes Fahrzeug nach einem der vorangegangenen Ansprüche, **dadurch gekennzeichnet, daß** der Abstandssensor (5a, b) redundant ausgebildet ist.

13. Autonomes Fahrzeug nach einem der vorangegangenen Ansprüche, **dadurch gekennzeichnet, daß** ein weiterer Abstandssensor (6) mit festeinstellbarem Abtastwinkel auf dem Dach des Fahrzeugs zur Erfassung von zulässigen Durchfahrtshöhen angeordnet ist.

14. Autonomes Fahrzeug nach Anspruch 13, **dadurch gekennzeichnet, daß** der Abstandssensor (6) ein Laserscanner-Sensor ist.

15. Autonomes Fahrzeug nach einem der vorangegangenen Ansprüche, **dadurch gekennzeichnet, daß** im vorderen Bereich des Fahrzeugs eine erste Kamera (9) für den Nahbereich und eine zweite Kamera (10) für den Fembereich angeordnet sind.

16. Autonomes Fahrzeug nach einem der vorangegangenen Ansprüche, **dadurch gekennzeichnet, daß** jeweils seitlich am Fahrzeug eine nach vorne ausgerichtete Kamera (11, 12) angeordnet ist.

17. Autonomes Fahrzeug nach einem der vorangegangenen Ansprüche, **dadurch gekennzeichnet, daß** die Kameras (9 - 13) als CCD-Kameras ausgebildet sind.

18. Autonomes Fahrzeug nach einem der vorangegangenen Ansprüche, **dadurch gekennzeichnet, daß** jeweils mindestens ein Radsensor (15a - d) an den Rädern des Fahrzeugs zur Reibwerterkennung angeordnet sind.

19. Autonomes Fahrzeug nach einem der vorangegangenen Ansprüche, **dadurch gekennzeichnet, daß** dem Fahrzeug ein Temperatursensor (18) und/oder ein Feuchtigkeits-Sensor (17) und/oder ein Luftdruck-Sensor (16) zugeordnet sind.

20. Autonomes Fahrzeug nach einem der vorangegangenen Ansprüche, **dadurch gekennzeichnet, daß** dem Fahrzeug mindestens ein Mikrofon (19) und/oder ein Lautsprecher (19) zugeordnet sind.

21. Autonomes Fahrzeug nach einem der vorangegangenen Ansprüche, **dadurch gekennzeichnet, daß** im vorderen Bereich des Fahrzeugs eine Wärmebild-Kamera (20) zur Erkennung von Lebewesen angeordnet ist.

22. Autonomes Fahrzeug nach einem der vorangegangenen Ansprüche, **dadurch gekennzeichnet, daß** die Positionserkennungseinrichtung einen DGPS-Sensor (14a, b) umfaßt.

23. Autonomes Fahrzeug nach Anspruch 15, **dadurch gekennzeichnet, daß** der DGPS-Sensor (14a, b) redundant ausgebildet ist.

24. Autonomes Fahrzeug nach einem der vorangegangenen Ansprüche, **dadurch gekennzeichnet, daß** die Fahrzeugaktorik (21 - 24) mindestens teilweise als x-by-wire-System oder als Fahrroboter ausgebildet ist.

25. Autonomes Fahrzeug nach einem der vorangegangenen Ansprüche, **dadurch gekennzeichnet, daß** dem Fahrzeug eine externe Kommunikationsverbindung (31) zugeordnet ist, die mit der Einrichtung (32) zur Routenplanung und/oder der Eingabeeinheit (29) für Fahraufträge verbunden ist.

26. Autonomes Fahrzeug nach einem der vorangegangenen Ansprüche, **dadurch gekennzeichnet, daß** der Positionserkennungseinrichtung ein Gyroskop oder eine Kreiselplattform zugeordnet ist.

27. Autonomes Fahrzeug nach einem der vorangegangenen Ansprüche, **dadurch gekennzeichnet, daß** die Sensoren (1-20) über mindestens einen Daten-Bus (27) mit dem Fahrzeugrechner (25) und/oder der Fahrzeugrechner (25) über mindestens einen Daten-Bus (27) mit dem Aktuatoren (21-24) verbunden sind.

28. Autonomes Fahrzeug nach Anspruch 17, **dadurch gekennzeichnet, daß** der Daten-Bus (27) ein CAN-Bus ist.

29. Verfahren zur Steuerung eines oder mehrerer autonomer Fahrzeuge nach einem der vorangegangenen Ansprüche, umfassend folgende Verfahrensschritte:
a) interne und/oder externe Eingabe eines gewünschten Fahrziels,
b) Übergabe des eingegebenen Fahrziels an die Einrichtung (32) zur Routenplanung,
c) Erfassung der aktuellen Fahrzeugposition mittels der Positionserkennungseinrichtung,
d) Ermittlung einer abschnittsweise definierten Route von der aktuellen Fahrzeugposition zum Fahrziel mittels einer digitalen Karte (33) und Optimierungsalgorithmen, unter Berücksichtigung von gegebenenfalls über die externe Kommunikationseinrichtung (31) übermittelten Verkehrsinformationen,
e) Übergabe des jeweils abzufahrenden Streckenabschnittes und der jeweils aktuellen Position des Kraftfahrzeuges von der Einrichtung (32) zur Routenplanung an die Einrichtung (34) zur Generierung des Weges,
f) Generierung eines optimierten Weges für den übergebenen Streckenabschnitt unter Berücksichtigung der gegebenenfalls über eine externe Kommunikationsverbindung (31) erhaltenen Verkehrsinformationen und in der digitalen Karte (33) abgespeicherten und/oder mittels der verschiedenen Sensoren (1 - 20) erfaßten Infrastrukturinformationen,
g) Übergabe des generierten Weges, der Fahrzeugzustandsdaten und der erfaßten Daten der verschiedenen Sensoren (1 - 20, 37) an die Fahrzeugkontrolleinrichtung (35),
h) Überprüfung der Funktionalität der einzelnen Fahrzeugmodule und Sensoren (1 - 20, 37) in der Fahrzeugkontrolleinrichtung (35) und gezielter Eingriff in die Fahrzeugaktorik (21 - 24), um das Fahrzeug bei sicherheitsrelevanten Systemdefekten in sicheren Systemzustand zu überführen,
i) Generierung eines Steuervektors für die einzelnen Aktuatoren (21 - 24) zur Umsetzung des generierten Weges unter Berücksichtigung erfaßter Daten der Einrichtung (36) zur Objekterkennung und
j) Übergabe des Steuervektors an die Einrichtung (39) zur Steuerung der Fahrzeugaktorik (21 - 24), die den einzelnen Fahrzeugaktuatoren (21 - 24) die zugehörigen Steuerdaten aus dem Steuervektor übergibt.

30. Verfahren nach Anspruch 21, **dadurch gekennzeichnet, daß** mittels der digitalen Karte (33) und der Videokamera (10) die für den jeweils aktuellen Streckenabschnitt zu beachtenden Verkehrszeichen ermittelt werden und mittels in der Fahrzeugkontrolleinrichtung (35) abgelegter Algorithmen für Verkehrsregeln der Steuervektor in Übereinstimmung mit der Straßenverkehrsordnung gebracht wird.

## Claims

1. Autonomous vehicle, comprising
- an input unit for one or more travel orders,
- a route-planning device comprising at least one position-detection device and one digital roadmap,
- a device for generating a path,
- an arrangement of sensors, comprising in each case at least one proximity sensor for registering objects and quality features of the path,
- a collision-avoidance device,
- a device for detecting status data of the vehicle,
- a vehicle controlling device
- and a device for controlling the vehicle actuation system as a function of signals generated by the vehicle controlling device,
**characterized in that**
the arranged of sensors comprises at least the following sensors:
- at least three proximity sensors (1, 2, 3) which are arranged in the front region of the vehicle,
- at least one proximity sensor (4) which is arranged in the rear region of the vehicle,
- if appropriate a proximity sensor (5a, b) which is directed onto the underlying surface and whose scanning angle can be adjusted,
- ultrasonic sensors and/or microwave radar sensors (7a - d, 8a - d) which are arranged on the respective sides of the vehicle
- and at least one camera (9, 10, 13) arranged in the front and rear regions of the vehicle, in each case.

2. Autonomous vehicle according to Claim 1, **characterized in that** the proximity sensors (2, 3) are two essentially horizontally orientated laser scanner sensors which are arranged in the front region of the vehicle.

3. Autonomous vehicle according to Claim 2, **characterized in that** the laser scanner sensors (2, 3) are embodied with a horizontal sensing range in the region of 270°.

4. Autonomous vehicle according to one of Claims 1 to 3, **characterized in that** the proximity sensor (4) which is arranged at least in the rear region of the vehicle is a laser scanner sensor.

5. Autonomous vehicle according to Claim 4, **characterized in that** the laser scanner sensor (4) is at least partially embodied as a 3D laser scanner.

6. Autonomous vehicle according to one of the preceding claims, **characterized in that** the proximity sensor (1) which is arranged at least in the front region of the vehicle is a radar sensor.

7. Autonomous vehicle according to one of the preceding claims, **characterized in that** the scanning angle of the proximity sensor (5a, b) can be adjusted as a function of the velocity of the vehicle and/or weather conditions.

8. Autonomous vehicle according to one of the preceding claims, **characterized in that** the proximity sensor (5a, 5b) which is directed onto the underlying surface is a laser scanner sensor.

9. Autonomous vehicle according to Claim 8, **characterized in that** the laser scanner sensor (5a, 5b) which is directed onto the underlying surface is arranged on the roof of the vehicle or in the region of the rear view mirror behind the windscreen of the vehicle.

10. Autonomous vehicle according to one of the preceding claims, **characterized in that** the cameras (9, 10, 13) which are arranged in the front and rear regions of the vehicle can be used to detect objects and/or road signs and/or lanes.

11. Autonomous vehicle according to one of the preceding claims, **characterized in that** the proximity sensor (5a, 5b) has a horizontal sensing range and/or a vertical sensing range, the horizontal sensing range being greater than the vertical sensing region.

12. Autonomous vehicle according to one of the preceding claims, **characterized in that** the proximity sensor (5a, b) is of redundant design.

13. Autonomous vehicle according to one of the preceding claims, **characterized in that** a further proximity sensor (6) with a finely adjustable scanning angle is arranged on the roof of the vehicle in order to sense permitted clearance heights.

14. Autonomous vehicle according to Claim 13, **characterized in that** the proximity sensor (6) is a laser scanner sensor.

15. Autonomous vehicle according to one of the preceding claims, **characterized in that** a first, short-range camera (9) and a second, long-range camera (10) are arranged in the front region of the vehicle.

16. Autonomous vehicle according to one of the preceding claims, **characterized in that** a camera (11, 12) which is oriented towards the front is arranged on each of the sides of the vehicle.

17. Autonomous vehicle according to one of the preceding claims, **characterized in that** the cameras (9 - 13) are embodied as CCD cameras.

18. Autonomous vehicle according to one of the preceding claims, **characterized in that** in each case at least one wheel sensor (15a - d) is arranged on the wheels of the vehicle for detecting the coefficient of friction.

19. Autonomous vehicle according to one of the preceding claims, **characterized in that** a temperature sensor (18) and/or a moisture sensor (17) and/or an air pressure sensor (16) are assigned to the vehicle.

20. Autonomous vehicle according to one of the preceding claims, **characterized in that** at least one microphone (19) and/or one loudspeaker (19) are assigned to the vehicle.

21. Autonomous vehicle according to one of the preceding claims, **characterized in that** a thermal imaging camera (20) for detecting living beings is arranged in the front region of the vehicle.

22. Autonomous vehicle according to one of the preceding claims, **characterized in that** the position detecting device comprises a DGPS sensor (14a, b).

23. Autonomous vehicle according to Claim 15, **characterized in that** the DGPS sensor (14a, b) is of redundant design.

24. Autonomous vehicle according to one of the preceding claims, **characterized in that** the vehicle actuation system (21 - 24) is embodied at least partially as an x-by-wire system or as a driving robot.

25. Autonomous vehicle according to one of the preceding claims, **characterized in that** the vehicle is assigned an external communications link (31) which is connected to the device (32) for route planning and/or to the input unit (29) for travel orders.

26. Autonomous vehicle according to one of the preceding claims, **characterized in that** a gyroscope or a gyroscope platform is assigned to the position detecting device.

27. Autonomous vehicle according to one of the preceding claims, **characterized in that** the sensors (1-20) are connected to the vehicle computer (25) via at least one data bus (27), and/or the vehicle computer (25) is connected to the actuators (21-24) via at least one data bus (27).

28. Autonomous vehicle according to Claim 17, **characterized in that** the data bus (27) is a CAN bus.

29. Method for controlling one or more autonomous vehicles according to one of the preceding claims, comprising the following method steps:
a) internal and/or external inputting of a desired travel destination,
b) transfer of the input travel destination to the device (32) for route planning,
c) sensing of the current position of the vehicle by means of the position detecting device,
d) determination of a route which is defined in sections from the current position of the vehicle to the travel destination by means of a digital map (33) and optimization algorithms, taking into account traffic information which may possibly have been transferred via the external communications link (31),
e) transfer of the route section which is to be respectively travelled along and the respective current position of the motor vehicle from the device (32) for route planning to the device (34) for generating the path,
f) generation of an optimized path for the transferred route section, taking into account the traffic information which has possibly been received via an external communications link (31) and infrastructure information which has been stored in the digital map (33) and/or sensed by means of the various sensors (1 - 20),
g) transfer of the generated path, of the vehicle status data and of the sensed data of the various sensors (1 - 20, 37) to the vehicle controlling device (35),
h) checking of the functionality of the individual vehicle modules and sensors (1 - 20, 37) in the vehicle controlling device (35) and selective intervention in the vehicle actuation system (21 - 24) in order to place the vehicle in the safe system state when there are safety-related system defects,
i) generation of a control vector for the individual actuators (21 - 24) for converting the generated path taking into account sensed data of the device (36) for detecting objects, and
j) transfer of the control vector to the device (39) for controlling the vehicle actuation system (21 - 24) which transfers the associated control data from the control vector to the individual vehicle actuators (21 - 24).

30. Method according to Claim 21, **characterized in that** the road signs which are to be taken into account for the respective current route section are determined by means of the digital map (33) and the video camera (10) and the control vector is made to comply with the highway code by means of traffic regulation algorithms which are stored in the vehicle controlling device (35).

## Revendications

1. Véhicule autonome, comprenant
- une unité de saisie pour un ou plusieurs ordres de circulation,
- un dispositif de planification d'itinéraire comportant au moins un dispositif de reconnaissance de position et une carte routière numérique,
- un dispositif de génération d'un trajet,
- un agencement de capteurs, comprenant respectivement au moins un capteur de distance pour détecter des objets et des caractéristiques d'état du trajet,
- un dispositif d'évitement de collisions,
- un dispositif de contrôle du véhicule,
- et un dispositif de commande de l'actorique du véhicule en fonction des signaux générés par le dispositif de contrôle du véhicule,
**caractérisé en ce que**
l'agencement de capteurs comporte au moins les capteurs suivants :
- au moins trois capteurs de distance (1, 2, 3) disposés dans la zone avant du véhicule,
- au moins un capteur de distance (4) disposé dans la zone arrière du véhicule,
- le cas échéant, un capteur de distance (5a, b) dirigé vers la voie de circulation dont l'angle de détection est réajustable,
- des capteurs à ultrasons et/ou des capteurs à radar à micro-ondes (7a-d, 8a-d) disposés sur les côtés respectifs du véhicule
- et au moins respectivement une caméra (9, 10, 13) disposée dans la zone avant et arrière du véhicule.

2. Véhicule autonome selon la revendication 1, **caractérisé en ce que** les capteurs de distance (2, 3) sont deux capteurs à scanner à laser orientés sensiblement à l'horizontale et disposés dans la zone avant du véhicule.

3. Véhicule autonome selon la revendication 2, **caractérisé en ce que** les capteurs à scanner à laser (2, 3) sont conformés avec une zone de détection horizontale dans la plage de 270°.

4. Véhicule autonome selon l'une quelconque des revendications 1 à 3, **caractérisé en ce que** le capteur de distance (4) disposé au moins dans la zone arrière du véhicule est un capteur à scanner à laser.

5. Véhicule autonome selon la revendication 4, **caractérisé en ce que** le capteur à scanner à laser (4) se présente au moins partiellement sous forme d'un scanner à laser 3 D.

6. Véhicule autonome selon l'une quelconque des revendications précédentes, **caractérisé en ce que** le capteur de distance (1) disposé au moins dans la zone avant du véhicule est un capteur à radar.

7. Véhicule autonome selon l'une quelconque des revendications précédentes, **caractérisé en ce que** l'angle de détection du capteur de distance (5a, b) est réajustable en fonction de la vitesse du véhicule et/ou des conditions météorologiques.

8. Véhicule autonome selon l'une quelconque des revendications précédentes, **caractérisé en ce que** le capteur de distance (5a, 5b) dirigé vers la voie de circulation est un capteur à scanner à laser.

9. Véhicule autonome selon la revendication 8, **caractérisé en ce que** le capteur à scanner à laser (5a, 5b) dirigé vers la voie de circulation est disposé sur le toit du véhicule ou derrière le pare-brise du véhicule au niveau du rétroviseur.

10. Véhicule autonome selon l'une quelconque des revendications précédentes, **caractérisé en ce que** les caméras (9, 10, 13) disposées dans la zone avant et arrière du véhicule sont utilisables pour la reconnaissance d'objets et/ou de panneaux de signalisation et/ou de la voie.

11. Véhicule autonome selon l'une quelconque des revendications précédentes, **caractérisé en ce que** le capteur de distance (5a, 5b) présente une zone de détection horizontale et/ou une zone de détection verticale, la zone de détection horizontale étant plus grande que la zone de détection verticale.

12. Véhicule autonome selon l'une quelconque des revendications précédentes, **caractérisé en ce que** le capteur de distance (5a, b) est de conformation redondante.

13. Véhicule autonome selon l'une quelconque des revendications précédentes, **caractérisé en ce qu'**un autre capteur de distance (6) comportant un angle de détection réglable fixement est disposé sur le toit du véhicule pour détecter les hauteurs de passage admissibles.

14. Véhicule autonome selon la revendication 13, **caractérisé en ce que** le capteur de distance (6) est un capteur à scanner à laser.

15. Véhicule autonome selon l'une quelconque des revendications précédentes, **caractérisé en ce que**, dans la zone avant du véhicule, est disposée une première caméra (9) pour le secteur proche et une deuxième caméra (10) pour le secteur éloigné.

16. Véhicule autonome selon l'une quelconque des revendications précédentes, **caractérisé en ce qu'**est disposée respectivement sur le côté du véhicule une caméra (11, 12) dirigée vers l'avant.

17. Véhicule autonome selon l'une quelconque des revendications précédentes, **caractérisé en ce que** les caméras (9-13) se présentent sous forme de caméras CCD.

18. Véhicule autonome selon l'une quelconque des revendications précédentes, **caractérisé en ce que** respectivement au moins un capteur de roues (15a-d) est disposé sur les roues du véhicule pour la reconnaissance des valeurs de frottement.

19. Véhicule autonome selon l'une quelconque des revendications précédentes, **caractérisé en ce que** sont associés au véhicule un capteur de température (18) et/ou un capteur d'humidité (17) et/ou un capteur de pression atmosphérique (16).

20. Véhicule autonome selon l'une quelconque des revendications précédentes, **caractérisé en ce que** sont associés au véhicule au moins un microphone (19) et/ou un haut-parleur (19).

21. Véhicule autonome selon l'une quelconque des revendications précédentes, **caractérisé en ce qu'**est disposée dans la zone avant du véhicule une caméra à image thermique (20) pour la reconnaissance d'êtres vivants.

22. Véhicule autonome selon l'une quelconque des revendications précédentes, **caractérisé en ce que** le dispositif de reconnaissance de position comprend un capteur DGPS (14a, b).

23. Véhicule autonome selon la revendication 15, **caractérisé en ce que** le capteur DGPS (14a, b) est de conformation redondante.

24. Véhicule autonome selon l'une quelconque des revendications précédentes, **caractérisé en ce que** l'actorique du véhicule (21-24) se présente du moins partiellement sous forme d'un système x par fil ou d'un robot de circulation.

25. Véhicule autonome selon l'une quelconque des revendications précédentes, **caractérisé en ce qu'**est associée au véhicule une liaison de communication externe (31) qui est reliée au dispositif (32) de planification d'itinéraire et/ou à l'unité de saisie (29) pour les ordres de circulation.

26. Véhicule autonome selon l'une quelconque des revendications précédentes, **caractérisé en ce qu'**est associé au dispositif de reconnaissance de position un gyroscope ou une plate-forme gyroscopique.

27. Véhicule autonome selon l'une quelconque des revendications précédentes, **caractérisé en ce que** les capteurs (1-20) sont reliés par l'intermédiaire d'au moins un bus de données (27) au calculateur du véhicule (25) et/ou que le calculateur du véhicule (25) est relié par l'intermédiaire d'au moins un bus de données (27) aux modules (21-24).

28. Véhicule autonome selon la revendication 17, **caractérisé en ce que** le bus de données (27) est un bus CAN.

29. Procédé de commande d'un ou plusieurs véhicules autonomes selon l'une quelconque des revendications précédentes, comprenant les étapes opératoires suivantes :
a) saisie interne et/ou externe d'une destination souhaitée,
b) transmission de la destination saisie au dispositif (32) de planification d'itinéraire,
c) détection de la position actuelle du véhicule au moyen du dispositif de reconnaissance de position,
d) détermination d'un itinéraire défini par sections de la position actuelle du véhicule par rapport à la destination au moyen d'une carte numérique (33) et d'algorithmes d'optimisation, en tenant compte d'informations sur le trafic éventuellement communiquées par l'intermédiaire du dispositif de communication externe (31),
e) transmission de la section de distance à parcourir respective et de la position actuelle respective du véhicule automobile du dispositif (32) de planification d'itinéraire au dispositif (34) de génération de trajet,
f) génération d'un trajet optimisé pour la section de distance communiquée en tenant compte des informations sur le trafic reçues le cas échéant par l'intermédiaire d'une liaison de communication externe (31) et d'informations sur les infrastructures enregistrées dans la carte numérique (33) et/ou détectées au moyen des différents capteurs (1-20),
g) transmission du trajet généré, des données d'état du véhicule et des données détectées des différents capteurs (1-20, 37) au dispositif de contrôle du véhicule (35),
h) vérification de la fonctionnalité des différents modules du véhicule et capteurs (1-20, 37) dans le dispositif de contrôle du véhicule (35) et intervention ciblée dans l'actorique du véhicule (21-34) pour mettre le véhicule dans un état de système sûr en cas de défauts du système concernant la sécurité,
i) génération d'un vecteur de commande pour les différents modules (21-24) pour la transposition du trajet généré en tenant compte des données détectées du dispositif (36) de reconnaissance d'objets et
j) transmission du vecteur de commande au dispositif (39) de commande de l'actorique du véhicule (21-24), qui transmet aux différents modules du véhicule (21-24) les données de commande corrélatives provenant du vecteur de commande.

30. Procédé selon la revendication 21, **caractérisé en ce qu'**au moyen de la carte numérique (33) et de la caméra vidéo (10), on détecte les panneaux de signalisation à respecter pour la section de distance respective actuelle et que le vecteur de commande est mis en concordance, au moyen d'algorithmes pour les règles de circulation intégrés dans le dispositif de contrôle du véhicule (35), avec la réglementation concernant la circulation routière.
